# EUROPÄISCHE PATENTSCHRIFT

(11) **EP 0 263 563 B1**
(45) Veröffentlichungstag und Bekanntmachung des Hinweises auf die Patenterteilung: **26.01.1994**
(21) Anmeldenummer: 87201903.9
(22) Anmeldetag: 05.10.1987
(51) Int. Cl.: H04Q 11/04

(54) **Zeitmultiplex-Vermittlungsanlage**
Time division multiplex exchange
Central à multiplexage temporel

(30) Priorität: 06.10.1986 DE 3633972
(43) Veröffentlichungstag der Anmeldung: 13.04.1988
(73) Patentinhaber: Philips Patentverwaltung GmbH, 22335 Hamburg (DE); Philips Electronics N.V., 5621 BA Eindhoven (NL)
(72) Erfinder: Floiger, Harald, Dipl.-Ing. (FH), D-8500 Nürnberg 50 (DE); Kraft, Peter, D-8431 Sengenthal (DE); Lamm, Andrea, D-8501 Rückersdorf (DE); Güthaus, Roland, D-8500 Nürnberg30 (DE)
(74) Vertreter: Peuckert, Hermann, Dipl.-Ing.

(56) Entgegenhaltungen:
- EP-A- 0 219 917
- WO-A-82/00232
- WO-A-83/01549
- DE-A- 2 718 317
- GB-A- 2 087 689

## Beschreibung

Die Erfindung bezieht sich auf eine Zeitmultiplex-Vermittlungsanlage gemäß dem Oberbegriff des Patentanspruchs 1.

Zum Aufbau und zur Aufrechterhaltung von Fernmeldeverbindungen, z.B. Fernsprechverbindungen werden in einer zentral gesteuerten Zeitmultiplex-Vermittlungsanlage die zur Verbindungsherstellung erforderlichen Wegedaten von der Zentralsteuereinrichtung erarbeitet und an eine Koppelfeld-Einstelleinrichtung geliefert. Für den Datenaustausch zwischen Zentralsteuereinrichtung und Koppelfeld-Einstelleinrichtung ist es aus der EP-B1-0 015 524 bekannt, den Verbindungsweg über das Koppelfeld bereitzustellen. Die zur Verbindungsherstellung erforderlichen Wegedaten werden bei der Herstellung von Fernmeldeverbindungen zu der Koppelfeld-Einstelleinrichtung übertragen und dort gespeichert. Im Einschaltefall oder im Wiedereinschaltefall nach einer Betriebsunterbrechung werden alle in der Koppelfeld-Einstelleinrichtung gespeicherten Koppelfeld-Einstelldaten dazu verwendet, um über das Koppelfeld eine Vielzahl von Verbindungen zwischen Zentralsteuereinrichtung und sämtlichen peripheren Anschlußeinrichtungen herzustellen.

Weiterhin ist aus der DE-PS 31 06 879 eine Schaltungsanordnung für zentral gesteuerte Zeitmultiplex-Fernmeldevermittlungsanlagen bekannt, bei der die Koppelfeld-Einstelleinrichtung über einen zusätzlichen Weg von der Zentralsteuereinrichtung erreicht wird. Über diese vom Koppelfeld unabhängige Verbindung zwischen Koppelfeld-Einstelleinrichtung und Zentralsteuereinrichtung werden die Koppelfeld-Einstelldaten übertragen, wobei im Falle mehrerer Koppelfeld-Einstelleinrichtungen eine Puffereinrichtung vorgesehen ist, mittels welcher eine Zwischenspeicherung und/oder eine Umcodierung von Daten und/oder eine Anpassung der Übertragungsgeschwindigkeit vorgenommen wird.

Werden die Koppelfeld-Einstelldaten von der Zentralsteuereinrichtung über das Koppelfeld zur Koppelfeld-Einstelleinrichtung übertragen (EP-B1-0 015 524), so ist eine weitere Einrichtung erforderlich, welche das Koppelfeld so initialisiert, daß zuerst ganz bestimmte Wege vermittelt werden. Ist dagegen zwischen Zentralsteuereinrichtung und Koppelfeld-Einstelleinrichtung eine unabhängige Verbindung vorgesehen (DE-PS 31 06 879), so ist für das Koppelfeld eine weitere Schnittstellenschaltung notwendig.

Ist die Initialisierungeinrichtung defekt oder die Verbindung gestört, so kann unter Umständen die Zentralsteuereinrichtung die Koppelfeld-Einstelleinrichtung nicht mehr erreichen, was den Totalausfall der Vermittlungsanlage bedeuten kann.

Weiterhin ist in der nichtvorveröffentlichten EP-A2-0 219 917 vorgeschlagen worden, dem Koppelfeld einen Codierer vorzuschalten, welcher aus jedem Datenwort ein Codewort mit einer Anzahl Codebits, welche größer als die Anzahl Datenbits je Datenwort ist, erzeugt. Teile des Codeworts (Teilcodewort) werden jeweils einer Anzahl parallel liegender Teilkoppelfelder zugeführt und in einem dem Teilkoppelfeld nachgeschalteten Decodierer wird aus allen Teilcodewörtern das ursprüngliche Datenwort erzeugt.

Für jedes Teilkoppelfeld ist ein eigener, vorzugsweise fehlergesicherter Einstellrechner (Koppelfeld-Einstelleinrichtung) vorgesehen und alle Einstellrechner werden parallel von der Zentralsteuereinrichtung aus gesteuert. Hierzu erhält jede Koppelfeld-Einstelleinrichtung über getrennte Verbindungen die gleichen Steuerdaten, welche in untereinander gleicher Weise das jeweils zugehörige Teilkoppelfeld steuern.

Weiterhin ist von jedem Teilkoppelfeld eine Verbindung zu einer Koppelfeld-Überwachungseinrichtung vorgesehen, über welche die Information durchgeschaltete Wege betreffend übertragen wird.

Durch die Aufteilung der vom Codierer erzeugten Codewörter auf Teilcodewörter und Vermittlung über die Teilkoppelfelder kann mittels den Teilkoppelfeldern nachgeschalteten Decodierern aus den empfangenen Teilcodewörtern das ursprüngliche Datenwort wieder rekonstruiert werden, selbst wenn die Codewörter in einem bestimmten Umfang fehlerbehaftet sind. Im Fehlerfall kann weiterhin ein Fehlersignal erzeugt werden, aus dem auf das defekte Teilkoppelfeld oder die defekte Koppelfeld-Einstelleinrichtung rückgeschlossen werden kann.

Für das einwandfreie Arbeiten des Koppelfelds ist es wichtig, daß die Teilkoppelfelder synchron zueinander arbeiten und dieselbe Einstellinformation erhalten. Nur so läßt sich sicherstellen, daß im Fehlerfall Rückschlüsse auf die ausgefallene Einheit (z.B. defektes Bauelement in einem Teilkoppelfeld) gezogen werden können.

Der Erfindung liegt die Aufgabe zugrunde, eine Zeitmultiplex-Vermittlungsanlage zu schaffen, die fehlergesichert zumindest zwischen Zentralsteuereinrichtung und Koppelfeld-Einstelleinrichtung Informationen überträgt.

Diese Aufgabe wird erfindungsgemäß durch eine Zeitmultiplex-Vermittlungsanlage mit den Merkmalen des Patentanspruchs 1 gelöst.

Die erfindungsgemäße Zeitmultiplex-Vermittlungsanlage weist den Vorteil auf, daß ein Fehler in der Koppelfeld-Einstelleinrichtung nicht den Totalausfall der Zeitmultiplex-Vermittlungsanlage bedeutet, da mittels der Decodierer der Fehler erkennbar und korrigierbar ist. Die Koppelfeld-Einstelleinrichtungen arbeiten synchron zueinander und erhalten stets dieselbe Einstellinformation. Die Vermittlungsanlage braucht für Reparaturzwecke nicht ausgeschaltet zu werden, da mittels der übrigen Decodierer beim Auswechseln der Koppelfeld-Einstelleinrichtung die Wiederherstellung der übertragenen Einstellinformation möglich ist. Weiterhin ist von Vorteil, daß am Koppelfeld-Eingang sowohl für die Übertragung von Einstellinformation als auch Nutzinformation eine einheitliche Schnittstellenschaltung geschaffen wurde.

In einer Weiterbildung der Erfindung ist ein Multiplexer zum Empfang von Teilcodeworten jedes ersten Codierers und zur Bildung eines dem zugeordneten Teilkoppelfeld zuzuführenden Signales, eine jedem Teilkoppelfeld zugeordnete Einstellinformation-Ausblendeinrichtung zur Trennung der Teilcodeworte mit der codierten Einstellinformation von der Nutzinformation aus dem von dem Multiplexer zugeführten Signal und
der zweite Decodierer zum Empfang der Teilcodeworte aller Einstellinformation-Ausblendeinrichtungen und zur Weiterleitung der Einstellinformation an die zugeordnete Koppelfeld-Einstelleinrichtung vorgesehen.

Weiter ist jeweils ein jedem Teilkoppelfeld zugeordneter Eingangssignal-Multiplexer zum Empfang mehrerer Zeitmultiplexsignale, von denen eines in einem Zeitkanal die von der Zentralsteuereinrichtung erzeugte Einstellinformation enthält, und zur Seriell-Parallel-Wandlung und zur zeitlichen Verschachtelung der Zeitmultiplexsignale vorgesehen.

Es kann auch eine Statusinformation fehlerfrei übertragen werden. Hierbei ist eine jedem Teilkoppelfeld zugeordnete Koppelfeld-Überwachungseinrichtung zur Erzeugung von Statusinformationen, jeweils ein weiterer jedem Teilkoppelfeld zugeordneter zweiter Codierer (41) zur Bildung von Teilcodeworten aus einem Datenwort mit der Statusinformation und
jeder erste Decodierer (10) auch zur Bildung eines Datenwortes aus den zugeführten Teilcodeworten mit einem Teil der codierten Statusinformation vorgesehen.
Diese Weiterbildung weist den Vorteil auf, daß auch für die übertragene Statusinformation die Möglichkeit einer Fehlerkorrektur gegeben ist.

In einer anderen Weiterbildung ist zwischen jeder Koppelfeld-Überwachungseinrichtung und dem entsprechenden zweiten Codierer ein Statusinformation-Multiplexer angeordnet,
ein weiterer Multiplexer zum Empfang von Teilcodeworten jedes zweiten Codierers vorgesehen,
der weitere Multiplexer mit einer Statusinformation-Einfügungsvorrichtung verbunden, die zur Einblendung der vom weiteren Multiplexer stammenden Teilcodeworte vorgesehen ist, ein jedem Teilkoppelfeld zugeordneter Demultiplexer mit der Statusinformation-Einfügungseinrichtung verbunden,
jeder erste Decodierer mit jedem Demultiplexer und
mit jedem ersten Decodierer ein Ausgangssignal-Multiplexer verbunden, der zur Trennung der Zeitmultiplexsignale und zur Parallel-Seriell-Wandlung vorgesehen ist.

Die Erfindung wird im folgenden anhand einer in der Zeichnung dargestellten Ausführungsform näher beschrieben und erläutert. Es zeigt:
- Fig. 1: ein vereinfachtes schematisches Schaltbild von Codierern und Decodierern zur Erläuterung der Aufteilung und Zusammenfassung des Datenwortes und
- Fig. 2: das Blockschaltbild eines Teiles der Zeitmultiplex-Vermittlungsanlage.

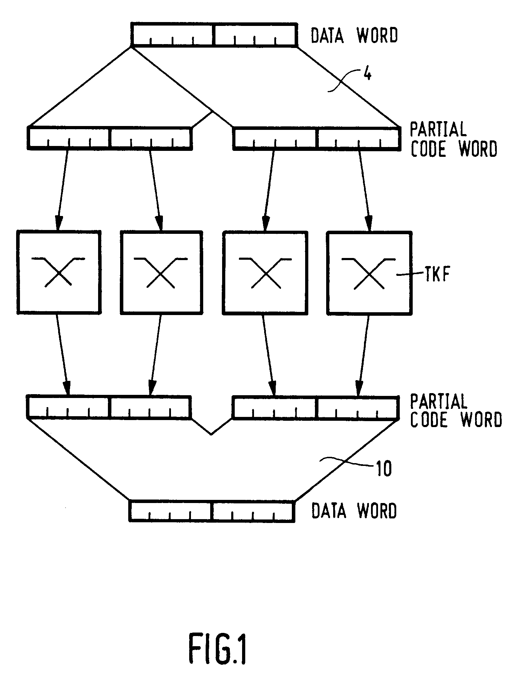

Fig. 1 zeigt ein vereinfachtes schematisches Schaltbild von Codierern 4, Teilkoppelfeldern TKF und Decodierern 10 zur Erläuterung der Aufteilung und Zusammenfassung eines Datenwortes der Nutzinformation.

In der nichtvorveröffentlichten EP-A2-0 219 917 ist die Erzeugung redundanter Codewörter, Aufteilung und Vermittlung über n Teilkoppelfelder TKF und Rekonstruktion der ursprünglichen Datenwörter aus den empfangenen Teilcodewörtern mittels Decodierern für die Nutzinformation ausführlich beschrieben und erläutert.

Beim n, k-Verfahren erzeugt jeder Codierer 4 aus dem zugeführten Datenwort ein Codewort, wobei jedes Datenwort beispielsweise 8 Bit und jedes Codewort 16 Bit umfaßt. Die vom Codierer 4 erzeugten Codewörter werden in Teilcodewörter mit je 4 Bit aufgeteilt, welche über getrennte Verbindungen auf die jeweiligen Teilkoppelfelder TKF führen. Die Ausgänge jedes Teilkoppelfelds TKF sind mit nachgeschalteten Decodierern 10 verbunden, welche aus jedem Codewort das ursprüngliche Datenwort zurückgewinnen.

Bei der erfindungsgemäßen Zeitmultiplex-Vermittlungsanlage wird von dem vorgenannten Datenübertragungsverfahren sowohl für die Koppelfeld-Einstellinformation als auch für die Statusinformation Gebrauch gemacht.

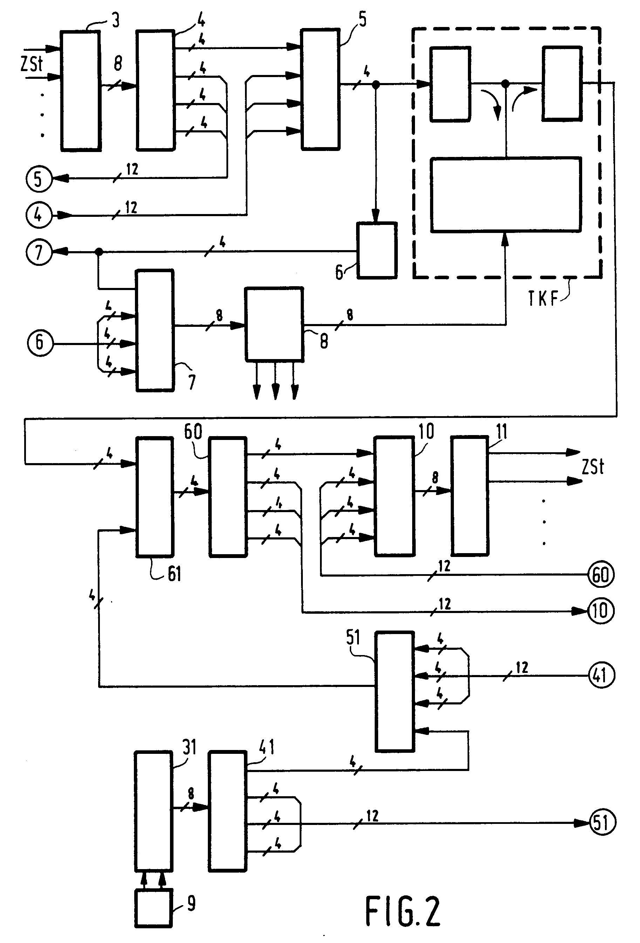

Fig. 2 zeigt das Blockschaltbild eines Teils der Zeitmultiplex-Vermittlungsanlage. Die Koppelfeld-Einstelldaten werden von einer in der Zeichnung nicht dargestellten Peripheriegruppenschaltung in einem Zeitkanal eines 2,048 Mbit/s-Zeitmultiplexsignals eingefügt. Bei einer bevorzugten Ausführungsform werden einem Eingangssignal-Multiplexer 3 acht solcher 2,048 Mbit/s-Zeitmultiplexsignale zugeführt, wobei davon sieben Zeitmultiplexsignale die Datenwörter der Nutzinformation enthalten. In dem jedem Teilkoppelfeld TKF zugeordneten Eingangssignal-Multiplexer 3 werden die Datenwörter der Zeitmultiplexsignale seriell-parallel gewandelt und zeitlich miteinander verschachtelt. Der Eingangssignal-Multiplexer 3 ist mit dem Codierer 4 und jeder Codierer 4 jeweils mit einem jedem Teilkoppelfeld TKF zugeordneten Multiplexer 5 verbunden. Dadurch werden an den Multiplexer 5 jeweils die Teilcodewörter der von jedem Codierer 4 zugeführten Einstellinformation angelegt.

Der Multiplexer 5 ist einerseits mit dem Teilkoppelfeld TKF, beispielsweise in der Form einer Zeitmultiplexstufe, andererseits mit einer Einstellinformation-Ausblendeinrichtung 6 verbunden. Jede Ausblendeinrichtung 6 ist weiterhin mit jedem Decodierer 7 verbunden, welcher aus den ausgeblendeten Codewörtern die Koppelfeld-Einstellinformation erzeugt und diese der dem Teilkoppelfeld TKF zugeordneten Koppelfeld-Einstelleinrichtung 8 zuführt. Die Koppelfeld-Einstelleinrichtung 8 ist über eine Verbindung mit dem Teilkoppelfeld TKF verbunden, wodurch bei einem Raumkoppelfeld die einzelnen Koppelpunkte geschaltet bzw. bei einem Zeitkoppelfeld die Speicheradressierung durchgeführt werden kann.

Die Funktionsweise der vorstehend beschriebenen Schaltungsanordnung ist wie folgt. Die Zentralsteuereinrichtung ZSt ist über eine Leitung für Datenkanäle am dem Teilkoppelfeld TKF zugeordneten Eingangssignal-Multiplexer 3 angeschlossen. Ein Zeitkanal trägt die Koppelfeld-Einstellinformation für die Teilkoppelfelder TKF und dieser Zeitkanal durchläuft zunächst den jedem Teilkoppelfeld TKF zugeordneten Eingangssignal-Multiplexer 3. Im nachfolgenden Codierer 4 wird alle dem Eingangssignal-Multiplexer 3 zugeführte Information in n Teilcodeworte aufgespalten, wovon jedes einem der n-Teilkoppelfelder TKF zugeführt wird. In den Teilkoppelfeldern TKF wird mittels Multiplexer 5 und Einstellinformation-Ausblendeinrichtung 6 die Einstellinformation von der Nutzinformation getrennt und an alle Decodierer 7 verteilt, so daß jedem der Teilkoppelfelder TKF ein vollständiges Codewort der Einstellinformation zur Verfügung steht. Mittels des jedem Decodierer 7 zugeführten Codeworts wird das ursprüngliche Datenwort wiederhergestellt und ein eventuell auftretender Fehler angezeigt.

Damit ist sichergestellt, daß jeder Koppelfeld-Einstelleinrichtung 8 die gleiche Einstellinformation zur Verfügung gestellt wird und daß die n Teilkoppelfelder TKF synchron arbeiten. Bis zum Codierer 4 sind die Datenwörter mit einem Paritybit geschützt, ab dem Codierer 4 sind die Datenwörter nach dem vorstehend erläuterten n, k-Verfahren geschützt.

Weiterhin ist jedem Teilkoppelfeld TKF eine Koppelfeld-Überwachungseinrichtung 9 zugeordnet, welche mit einem Statusinformation-Multiplexer 31 verbunden ist. Mit dessen Ausgang ist ein Codierer 41 verbunden und jeder Codierer 41 ist seinerseits mit einem jedem Teilkoppelfeld TKF zugeordneten Multiplexer 51 verbunden. Durch diese Anordnung wird jedem Multiplexer 51 jeweils das Teilcodewort der Statusinformation aller den Teilkoppelfeldern TKF zugeordneten Koppelfeld-Überwachungseinrichtungen 9 zugeführt.

Der Multiplexer 51 ist mit einer Statusinformation-Einfügungseinrichtung 61 verbunden, an deren Ausgang ein Demultiplexer 60 angeschlossen ist. Mit jedem Demultiplexer 60 ist jeweils ein Decodierer 10 verbunden, an dessen Ausgang ein dem Teilkoppelfeld TKF zugeordneter Ausgangssignal--Demultiplexer 11 angeschlossen ist. Mittels des Ausgangssignal-Demultiplexers 11 wird der zugeführte Datenstrom wieder auf acht 2,048 Mbit/s-Zeitmultiplexsignale aufgeteilt, parallel-seriell gewandelt und das die Statusinformation enthaltende Zeitmultiplexsignal über eine in der Zeichnung nicht dargestellte Peripheriegruppenschaltung der Zentralsteuereinrichtung ZSt zugeführt.

Die Funktionsweise der vorstehend geschilderten Schaltungsanordnung ist wie folgt. Der Zustand der Zeitmultiplex-Vermittlungsanlage wird im sogenannten Statusreport der Zentralsteuereinrichtung ZSt übermittelt. Im Statusreport sind die Anzeigen aller Koppelfeld-Überwachungseinrichtungen (Paritychecker, Decodierer) enthalten. Die Statusinformation wird in jedem Teilkoppelfeld TKF byteweise festgestellt, jedes Byte wird durch den Codierer 41 geleitet, in n Teilcodewörter aufgespaltet und jeweils jedem Multiplexer 51 zugeführt. Durch die spezielle Anordnung von Multiplexer 51 und Statusinformation-Einfügungseinrichtung 61 am Ausgang des Teilkoppelfelds TKF wird die Statusinformation in jenen Zeitkanal eingefügt, aus welchem vorher die Einstellinformation mittels der Einstellinformation-Ausblendeinrichtung 6 ausgeblendet worden ist. Der Zeitmultiplexkanal mit der Statusinformation durchläuft, wie die Zeitkanäle der Nutzinformation auch, den Decodierer 10 sowie den daran angeschlossenen Ausgangssignal-Demultiplexer 11 und erreicht dadurch die Zentralsteuereinrichtung ZSt.

Durch die Anwendung des n, k-Verfahrens für Koppelfeld-Einstellinformation und Statusinformation wird auch für den Fall, daß Störungen in dem Verbindungsweg oder in den Koppelfeld-Einstelleinrichtungen auftreten sichergestellt, daß die Vermittlungsanlage nicht ausfällt und der Austausch des fehlerhaften Teils während des Vermittlungsbetriebs vorgenommen werden kann. Dies wird dadurch erreicht, daß die Information nicht über das Koppelfeld vermittelt wird und daß anhand der Teilcodewörter im Decodierer wieder das ursprüngliche Datenwort erzeugt wird.

## Patentansprüche

1. Zeitmultiplex-Vermittlungsanlage
mit einem mehrere Teilkoppelfelder enthaltenen Koppelfeld, mit jeweils einem Teilkoppelfeld zugeordneten ersten Codierer (4) zur Bildung eines mehr Codebits als Datenbits enthaltenen Codewortes aus einem Datenwort und zur Zuführung von Teilcodeworten zu jedem Teilkoppelfeld,
mit jeweils einem Teilkoppelfeld zugeordneten ersten Decodierer (10) zur Bildung eines Datenwortes aus den von den Teilkoppelfeldern abgegebenen Teilcodewörtern
mit einer Zentralsteuereinrichtung zur Erzeugung von Einstellinformationen und
mit einer jedem Teilkoppelfeld zugeordneten Koppelfeld-Einstelleinrichtung (8),
dadurch gekennzeichnet,
daß jeder erste Codierer (4) auch zur Bildung von Teilcodewörtern aus einem die von der Zentralsteuereinrichtung in einen Zeitkanal eingefügte Einstellinformation enthaltenen Datenwort vorgesehen ist und
daß jeweils weitere jedem Teilkoppelfeld zugeordnete zweite Decodierer (7) zum Empfang eines Teilcodewortes mit einem Teil der codierten Einstellinformation und zur Bildung eines Datenwortes mit der Einstellinformation für die Koppelfeld-Einstelleinrichtung (8) vorgesehen sind.

2. Zeitmultiplex-Vermittlungsanlage nach Anspruch 1, dadurch gekennzeichnet,
daß ein Multiplexer (5) zum Empfang von Teilcodeworten jedes ersten Codierers (4) und zur Bildung eines dem zugeordneten Teilkoppelfeld zuzuführenden Signales vorgesehen ist,
daß eine jedem Teilkoppelfeld zugeordnete Einstellinformation-Ausblendeinrichtung (6) zur Trennung der Teilcodeworte mit der codierten Einstellinformation von der Nutzinformation aus dem von dem Multiplexer (5) zugeführten Signal und
daß der zweite Decodierer (7) zum Empfang der Teilcodeworte aller Einstellinformation-Ausblendeinrichtungen (6) und zur Weiterleitung der Einstellinformation an die zugeordnete Koppelfeld-Einstelleinrichtung (8) vorgesehen ist.

3. Zeitmultiplex-Vermittlungsanlage nach Anspruch 2, dadurch gekennzeichnet,
daß jeweils ein jedem Teilkoppelfeld zugeordneter Eingangssignal-Multiplexer (3) zum Empfang mehrerer Zeitmultiplexsignale, von denen eines in einem Zeitkanal die von der Zentralsteuereinrichtung erzeugte Einstellinformation enthält, und zur Seriell-Parallel-Wandlung und zur zeitlichen Verschachtelung der Zeitmultiplexsignale vorgesehen ist.

4. Zeitmultiplex-Vermittlungsanlage nach einem der vorhergehenden Ansprüche, dadurch gekennzeichnet,
daß eine jedem Teilkoppelfeld zugeordnete Koppelfeld-Überwachungseinrichtung (9) zur Erzeugung von Statusinformationen vorgesehen ist,
daß jeweils ein weiterer jedem Teilkoppelfeld zugeordneter zweiter Codierer (41) zur Bildung von Teilcodeworten aus einem Datenwort mit der Statusinformation vorgesehen ist und
daß jeder erste Decodierer (10) auch zur Bildung eines Datenwortes aus den zugeführten Teilcodeworten mit einem Teil der codierten Statusinformation vorgesehen ist.

5. Zeitmultiplex-Vermittlungsanlage nach Anspruch 4,
dadurch gekennzeichnet,
daß zwischen jeder Koppelfeld-Überwachungseinrichtung (9) und dem entsprechenden zweiten Codierer (41) ein Statusinformation-Multiplexer (31) angeordnet ist,
daß ein weiterer Multiplexer (51) zum Empfang von Teilcodeworten jedes zweiten Codierers (41) vorgesehen ist,
daß der weitere Multiplexer (51) mit einer Statusinformation-Einfügungsvorrichtung (61) verbunden ist, die zur Einblendung der vom weiteren Multiplexer (51) stammenden Teilcodeworte vorgesehen ist,
daß ein jedem Teilkoppelfeld zugeordneter Demultiplexer (60) mit der Statusinformation-Einfügungseinrichtung (61) verbunden ist,
daß jeder erste Decodierer (10) mit jedem Demultiplexer (60) verbunden ist und
daß mit jedem ersten Decodierer (10) ein Ausgangssignal-Multiplexer (11) verbunden ist, der zur Trennung der Zeitmultiplexsignale und zur Parallel-Seriell-Wandlung vorgesehen ist.

## Claims

1. Time-division multiplex exchange comprising a switching matrix which includes a plurality of sub-switching matrices, the exchange including first encoders (4) assigned to each sub-switching matrix for forming from a data word a code word that contains more code bits than data bits and for applying sub-code words to each sub-switching matrix, including first decoders (10) assigned to each sub-switching matrix for forming a data word from the sub-code words issued by the sub-switching matrices, including a central controller for producing setting information signals, and including a switching matrix setting arrangement (8) assigned to each sub-switching matrix, characterized in that each first encoder (4) is also provided for forming sub-code words from a data word contained in a setting information signal inserted into a time channel by the central controller and in that further second decoders (7) assigned to each sub-switching matrix are provided for receiving a sub-code word which contains part of the coded setting information signal and for forming a data word which contains the setting information for the switching matrix setting arrangement (8).

2. Time-division multiplex exchange as claimed in Claim 1, characterized in that a multiplexer (5) is provided for receiving sub-code words from each first encoder (4) and for forming a signal to be applied to the assigned sub-switching matrix, in that a setting information extraction circuit (6) assigned to each sub-switching matrix is provided for separating the sub-code words which contain the coded setting information from the useful information in the signal supplied by the multiplexer (5), and in that the second decoder (7) is provided for receiving the sub-code words from all the setting information extraction circuits (6) and for conveying the setting information to the assigned switching matrix setting arrangement (8).

3. Time-division multiplex exchange as claimed in Claim 2, characterized in that each input signal multiplexer (3) assigned to a sub-switching matrix is arranged for receiving a plurality of time-division multiplex signals, one of which signals containing in a time channel the setting information produced by the central controller, and is provided for serial-to-parallel conversion and time interleaving of the time-division multiplex signals.

4. Time-division multiplex exchange as claimed in one of the preceding Claims, characterized in that a switching matrix monitoring circuit (9) is provided for producing status information signals, in that second encoders (41) assigned to each further sub-switching matrix are provided for forming sub-code words from a data word which contains the status information, and in that each first decoder (10) is also provided for forming a data word from the supplied sub-code words which contain part of the coded status information.

5. Time-division multiplex exchange as claimed in Claim 4, characterized in that a status information multiplexer (31) is inserted between each switching matrix monitoring circuit (9) and the associated second encoder (41), in that a further multiplexer (51) is provided for receiving sub-code words from each second encoder (41), in that the further multiplexer (51) is connected to a status information insertion circuit (61) arranged for interleaving the sub-code words coming from the further multiplexer (51), in that a demultiplexer (60) assigned to each sub-switching matrix is connected to the status information insertion circuit (61), in that each first decoder (10) is connected to each demultiplexer (60) and in that an output signal multiplexer (11), which is provided for separating the time-division multiplex signals and for the parallel-to-serial conversion, is connected to each first decoder (10).

## Revendications

1. Central à multiplexage temporel comportant une matrice de commutation qui contient plusieurs matrices de commutation partielles, des premiers codeurs (4) correspondant chacun à une matrice de commutation partielle pour former un mot-code contenant davantage de bits-codes que de bits de données à partir d'un mot de données et pour amener des mots-codes partiels à chaque matrice de commutation partielle, avec des premiers décodeurs (10) correspondant chacun à une matrice de commutation partielle pour former un mot de données à partir des mots-codes partiels fournis par les matrices de commutation partielles, un dispositif central de commande destiné à produire des informations de réglage et un dispositif (8) de réglage de matrices de commutation correspondant à chacune des matrices de commutation partielles, caractérisé en ce que chaque premier codeur (4) sert aussi à former des mots-codes partiels à partir d'un mot de données contenant l'information de réglage introduite dans une tranche de temps par le dispositif central de commande, et que des deuxièmes décodeurs (7) supplémentaires correspondant à chacune des matrices de commutation partielles sont destinés à recevoir un mot-code partiel avec une partie de l'information de réglage codée et à former un mot-code avec l'information de réglage pour le dispositif (8) de réglage de matrice de commutation.

2. Central à multiplexage temporel selon la revendication 1, caractérisé en ce qu'un multiplexeur (5) est prévu pour recevoir des mots-codes partiels de chaque premier codeur (4) et pour former un signal qui doit être amené à la matrice de commutation partielle correspondante, qu'un dispositif (6) d'élimination de l'information de réglage, correspondant à chaque matrice de commutation partielle est prévu pour séparer les mots-codes partiels, comportant les informations de réglage codées, de l'information utile provenant du signal amené depuis le multiplexeur (5) et que le deuxième décodeur (7) est prévu pour recevoir les mots-codes partiels de tous les dispositifs (6) d'élimination des informations de réglage et transmettre les informations de réglage au dispositif de réglage de matrice de commutation (8) correspondant.

3. Central à multiplexage temporel selon la revendication 2, caractérisé en ce qu'un multiplexeur (3) de signaux d'entrée correspondant à chaque matrice de commutation partielle est prévu pour recevoir plusieurs signaux de multiplexage temporel dont l'un contient dans une tranche de temps l'information de réglage produite par le dispositif central de commande, et pour convertir en série-parallèle et imbriquer dans le temps des signaux de multiplexage temporel.

4. Central à multiplexage temporel selon l'une des revendications précédentes, caractérisé en ce qu'un dispositif (9) de surveillance de matrice de commutation, correspondant à chaque matrice de commutation partielle, est prévu pour produire des informations d'état, qu'un deuxième codeur (41) correspondant à chaque matrice de commutation partielle pour former des mots-codes partiels, à partir d'un mot de données comportant l'information d'état, et que chaque premier décodeur (10) est prévu également pour former, à partir des mots-codes partiels reçus, un mot-code comportant une partie de l'information d'état codée.

5. Central à multiplexage temporel selon la revendication 4, caractérisé en ce qu'un multiplexeur (31) d'informations d'état est placé entre chaque dispositif (9) de surveillance de matrice de commutation et le deuxième codeur (41) correspondant, qu'un autre multiplexeur (51) est prévu pour recevoir des mots-codes partiels d'un codeur (41) sur deux, que cet autre multiplexeur (51) est relié à un dispositif (61) d'introduction d'informations d'état, qui est prévu pour introduire les mots-codes partiels provenant de l'autre multiplexeur (51), qu'un démultiplexeur (60) correspondant à chaque matrice de commutation partielle est relié au dispositif (61) d'introduction d'informations d'état, que chaque premier décodeur (10) est relié à chaque démultiplexeur (60) et que, à chaque premier décodeur (10), est relié un multiplexeur (11) de signaux de sortie qui sépare les signaux de multiplexage temporel et sert à la conversion parallèle-série.
